(19) Europäisches Patentamt
European Patent Office
Office européen des brevets

(11) **EP 1 742 309 B1**

(12) **EUROPEAN PATENT SPECIFICATION**

(45) Date of publication and mention
of the grant of the patent:
**21.10.2009 Bulletin 2009/43**

(51) Int Cl.:
***H01S 3/10*** *(2006.01)* ***G01N 21/35*** *(2006.01)*

(21) Application number: **05014705.7**

(22) Date of filing: **06.07.2005**

(54) **Method and radiation source for generating THz radiation**

Verfahren und Strahlungsquelle zur Erzeugung von THz-Strahlung

Procédé et source de rayonnement permettant de générer un rayonnement THz

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**10.01.2007 Bulletin 2007/02**

(73) Proprietors:
• **Max-Planck-Gesellschaft zur Förderung der Wissenschaften e.V.**
**80539 München (DE)**
• **Friedrich-Alexander-Universität Erlangen-Nürnberg**
**91054 Erlangen (DE)**

(72) Inventors:
• **Wang, Lijun**
**91096 Möhrendorf (DE)**
• **Döhler, Gottfried**
**91054 Erlangen (DE)**
• **Malzer, Stefan**
**90522 Oberasbach (DE)**
• **Lu, Zehuang**
**91058 Erlangen (DE)**
• **Preu, Sascha**
**91781 Weißenburg (DE)**
• **Zhang, Jie**
**91068 Erlangen (DE)**

(74) Representative: **Hertz, Oliver**
**v. Bezold & Partner**
**Patentanwälte**
**Akademiestrasse 7**
**80799 München (DE)**

(56) References cited:
**US-A1- 2004 065 831**

• **SAEEDKIA D ET AL: "CW photoconductive photomixer/antenna array source for THz applications" MICROWAVE PHOTONICS, 2004. MWP'04. 2004 IEEE INTERNATIONAL TOPICAL MEETING ON OGUNQUIT, ME, USA 4-6 OCT. 2004, PISCATAWAY, NJ, USA,IEEE, US, 4 October 2004 (2004-10-04), pages 317-320, XP010771586 ISBN: 0-7803-8491-1**
• **SAEEDKIA D ET AL: "Analysis and design of a photoconductive integrated photomixer/antenna for terahertz applications" IEEE JOURNAL OF QUANTUM ELECTRONICS IEEE USA, vol. 41, no. 2, February 2005 (2005-02), pages 234-241, XP002361236 ISSN: 0018-9197**
• **ITOH Y ET AL: "Generation of short millimetre-wave radiation using dot-matrix uni-travelling-carrier photodiode" ELECTRONICS LETTERS, IEE STEVENAGE, GB, vol. 39, no. 1, 9 January 2003 (2003-01-09), pages 65-67, XP006019481 ISSN: 0013-5194**
• **DOHLER G H ET AL: "THz-photomixer based on quasi-ballistic transport" SEMICONDUCTOR SCIENCE AND TECHNOLOGY IOP PUBLISHING UK, vol. 20, no. 7, 8 June 2005 (2005-06-08), pages S178-S190, XP002361237 ISSN: 0268-1242**
• **MATSUURA S ET AL: "Design and characterization of optical-THz phase-matched traveling-wave photomixers" PROCEEDINGS OF THE SPIE - THE INTERNATIONAL SOCIETY FOR OPTICAL ENGINEERING SPIE-INT. SOC. OPT. ENG USA, vol. 3795, 1999, pages 484-492, XP002361238 ISSN: 0277-786X**

EP 1 742 309 B1

## Description

The present invention relates to a method for generating THz radiation with a photomixer device irradiated with laser beams being detuned relative to each other. Furthermore, the present invention relates to a radiation source for generating THz radiation including a photomixer device.

Within the electro-magnetic spectrum, a frequency range exists which is hardly accessible by electrically driven devices from the lower frequency side or by optical methods from the higher frequency side. This frequency range approximately ranges from 0.3 to 5 THz. THz radiation is considered as a promising tool e.g. for non-destructive imaging.

Possible approaches for generating THz radiation are based on using electron accelerators or quantum cascade lasers (QCL) operated in the far infrared region (S. Babieri et al. in "APL", Bd. 85, 2004, S. 1674). While the application of the first approach is restricted to the availability of electron accelerators, the QCL sources have an essential disadvantage in that they are operated at low temperature of about 70 K.

A progress has been made with solid state devices (so-called photomixer devices) wherein the generation of high-frequency radiation is based on generating periodically charge carriers in a semiconductor by two lasers emitting at nearly the same photon frequencies but being detuned by a beat frequency (photomixing, see e.g. G. H. Döhler et al. in "Semicond. Sci. Technol.", Bd. 20, 2005, S. S178 - S190, E. R. Brown et al. in "APL", Bd. 66, 1995, S. 285 and K. A. McIntosh et al. in "APL", Bd. 67, 1996, S. 3844). The current of photo-generated carriers is modulated with the beat frequency in the THz range. If the photo-generated carriers are subjected to a dc electric field applied between two contacts connected to an antenna, a high-frequency current is induced in the semiconductor. Accordingly, electromagnetic radiation is emitted from the antenna with a dipole characteristic. The beat frequency is selected in the required high-frequency range to be emitted.

The conventional photomixer radiation sources have disadvantages in terms of low radiation power and non-directed radiation characteristic. For practical applications e.g. in the field of THz imaging, high power directional THz emission is required.

In the publications of D. Saeedkia et al. in "Microwave Photonics" 2004, MWP '04, 2004, IEEE International Topical Meeting on Ogunquit, ME, USA, 4-6 October 2004, p. 317-320 and in "IEEE Journal of Quantum Electronics", IEEE USA, Vol. 41, 2005, p. 234-241, integrated photo-mixing devices for Terahertz applications are described, wherein it has been proposed to illuminate an array of high-frequency emitters with laser beams. Two laser beams are commonly directed on the whole array of emitters.

Y. Ito et al. describe in "Electronics Letters" IEEE Stevenage, GB, Vol. 39, 2003, p. 65-67, the generation of millimeter wave irradiation using a dot-matrix photodiode, which is illuminated through a single optical fibre.

The object of the invention is to provide an improved method of generating high-frequency radiation with a photomixer device avoiding the disadvantages of the conventional techniques and having an increased range of application. In particular, the method of the invention is to provide high-frequency radiation with increased intensity with a radiation characteristic allowing a direct use in high frequency radiation imaging or information processing. Furthermore, the object of the invention is to provide an improved radiation source for generating high-frequency radiation avoiding the disadvantages of the conventional radiation sources.

These objects are solved with methods and radiation sources having the features of claims 1 or 11, respectively. Advantages embodiments and applications of the invention are defined in the dependent claims.

The present invention provides the generation of high-frequency radiation with an array of at least two high-emitters being simultaneously irradiated with detuned laser beams. The method is capable of generating a collimated high-frequency radiation beam as the result of a constructive superposition of the emissions of the single emitters. An essential advantage of the invention is given by the fact that a high-frequency radiation beam with a definite direction and collimation is obtained which directly can be used in image recording, in particular in biological tissue imaging, medical imaging, environment/pollution monitoring, atmospheric sensing, high-frequency spectroscopy, -microscopy or -photography as well as in high-frequency information technology, e.g. in WLAN (wireless local area network) applications.

The present invention is based on the result of the inventors having found that detuned laser beams can be controlled with a sufficient precision for simultaneously driving all emitters of the emitter array. Advantageously, the high-frequency radiation is polarized.

In the present specification, the term "high-frequency" refers to the frequency range which usually is called the THz frequency range (about 0.3 THz to about 5 THz). Accordingly, high-frequency radiation refers to THz radiation. The term "high-frequency emitter" refers to any type of THz emitter being operated with the above photomixing process, regardless of the material media used.

According to a preferred embodiment of the invention, all high-frequency emitters in the emitter array are irradiated exclusively with one laser beam including one pair of laser wavelengths or with one pair of laser beams. Accordingly, only two lasers or even only one laser (with two wavelengths) are used for inducing the high frequency beat frequency in all emitters. This offers the capability of precise wavelengths and phase control of the radiating laser (s). According to an important result of the inventors, a plurality of emitters arranged as an array on a common substrate can be excited with broadened laser beams with a sufficient intensity.

According to a further preferred embodiment of the invention, the high-frequency emitters are irradiated with parallel laser beams. At collinear incidence perpendicular to the substrate carrying the emitter array, all emitters are driven in phase and the output high-frequency beam is a superposition of all individual dipole emission patterns, which results advantageously in a highly collimated high-frequency radiation. This radiation has the same direction as the incident laser beams.

According to an alternative embodiment of the invention, the laser beams have different angles of incidence. If the relative angle of incidence between both laser beams is finite, the phase of the beat signal with respect to the individual emitters and therefore the phase of the emitted high-frequency radiation can be controlled. As an advantageous consequence, the emission of the individual dipole emitters still results in a highly collimated high-frequency beam which in addition has a predetermined propagation angle relative to the substrate carrying the emitter array. The propagation angle is determined by the difference between the angles of incidence of the irradiating laser beams.

According to a particularly preferred embodiment of the invention, the propagation angle of the high frequency radiation beam is adjusted and/or changed by adjusting and/or varying at least one of the angles of incidence of the laser beams. The inventors have found, that the magnitude of changing the angle of incidence is essentially smaller than the desired high-frequency propagation angles as this depends on the ratio of the laser wavelengths to the high-frequency radiation wavelength. With a small adjustment of the angle of incidence within the range below 2°, a broad range of propagation angles (up to 180°) can be covered.

If the angle of incidence is varied by pivoting a mirror arranged in the optical path from a laser to the photomixer, phase control and the corresponding propagation angle control can be simplified in an advantageous manner. Depending on the orientation of the mirror, the phase of the laser beams directed to the emitter array can be controlled and, accordingly, the direction of the emitted high-frequency radiation can be chosen within a wide range.

According to a further modification of the method of the invention, the frequency of the high-frequency radiation can be tuned as well. To this end, the wavelength of at least one of the detuned laser beams is varied for varying the beat frequency in the emitters.

According to the invention, the array of high-frequency emitters comprises a 2-dimensional array of at least 4 high-frequency emitters, especially preferred at least 4 * 10 emitters. With increasing number of emitters, the intensity and collimation properties of the high-frequency radiation can be improved.

Another important aspect of the invention is given by the fact that there are no particular restrictions with regard to the optical set-up for irradiating the array of emitters. If the emitters are irradiated via plurality of lenses, e.g. via a micro-array of optical lenses, advantages may arise in that the laser beams are automatically adjusted for all high-frequency emitters. Furthermore, as the pitch of the emitter array is close to the diameter of standard glass fibres (about 125 $\mu$m), a fibres bundle can be used for supplying the laser beams. The fibre bundle would supply the laser beams either by distributing the super-imposed signal from two high-power lasers or by individual coherently coupled pairs of low-power lasers (e.g. diode lasers). The latter one could be supplied as vertical cavity surface emitting lasers (VCSEL's) as well, either to be coupled in a fibre bundle or, alternatively, coupled directly into the emitters (embodiment with hybrid opto-electronic integrated devices).

Preferably, antennas are used for coupling the high-frequency radiation into free space. If resonant antennas (e. g. dipole antennas) are used, advantages in terms of narrow band emission with high efficiency are obtained. Alternatively, broadband antennas, e. g. "bow tie", spiral, or logarithmically periodic antennas are used.

Furthermore, the present invention provides a radiation source or high-frequency source comprising an array of at least two photomixer devices with high-frequency emitters being arranged for irradiation with laser beams detuned by a high-frequency and for constructively superimposing electro-magnetic high-frequency emissions of the high-frequency emitters. The emitters are arranged on a surface of the substrate such that the high-frequency emissions can be superimposed for forming a collimated beam. The emitters represent a phased array with a compact structure which advantageously can be used in all fields of applying THz radiation.

Preferably, the distance between the individual emitters is comparable with the wavelength of the high-frequency radiation to be generated. According to the invention, the distance is smaller than 500 $\mu$m, in particular smaller than 300 $\mu$m. In view of a precise phase control of the irradiation, a lower limit of the distance is 50 $\mu$m. With these dimensions, a plurality of emitters can be arranged with high density, so that the size of the photomixer is not essentially larger compared with conventional semiconductor based emitters.

If according to the invention, the array is distributed 2-dimensionally on the substrate, e.g. as a matrix of straight rows and columns, the intensity of the emitted high-frequency radiation can be increased.

Another essential advantage of the invention is given by the fact that there are no restrictions with regard to the type of high-frequency emitter used for providing the emitter array. Generally, any type of semiconductor based photomixer emitters can be used according to the invention.

According to a preferred embodiment of the invention, the photomixer with the emitter array is combined with an irradiation device being arranged for directing the laser beams with a predetermined phase relationship to the emitter array. The photomixer and irradiation devices are fixed to each other so that a compact structure is provided. The compact radiation source with integrally connected photomixer and irradiation devices avoids the need for adjustment steps in practical use. Depending on the shape of the emitter array, the structure of the irradiation device can be selected among e.g. a micro-array of lenses, or a bundle of optical fibres.

According to a further, particularly preferred modification, the radiation source of the invention comprises a combination of the photomixer and irradiation devices with a laser device providing detuned laser beams for irradiating the emitter array. With this combination, the radiation source can be provided as a stable, miniaturized device being suitable for practical applications under routine conditions. Preferably, the laser device contains only one laser with two wavelengths or only two lasers with one wavelength each.

Depending on the application, the laser device is provided with optical components generating parallel or non-parallel laser beams. In the latter case, the optical components preferably include a deflection mirror being adjustable for varying the angle of incidence of one of the laser beams. If the lasers are tuneable, further advantages are obtained for a flexible application of the radiation source.

Further advantages and details of the invention are described in the following with reference to the attached drawings. The drawings show in:

Figure 1: a schematic illustration of an embodiment of a radiation source according to the invention,

Figure 2: an illustration of the incidence and propagation angles of optical and high-frequency radiation;

Figure 3: a detail of irradiation and photomixer devices according to a further embodiment of the invention; and

Figure 4: plane views of emitter arrays according to further embodiments of the invention.

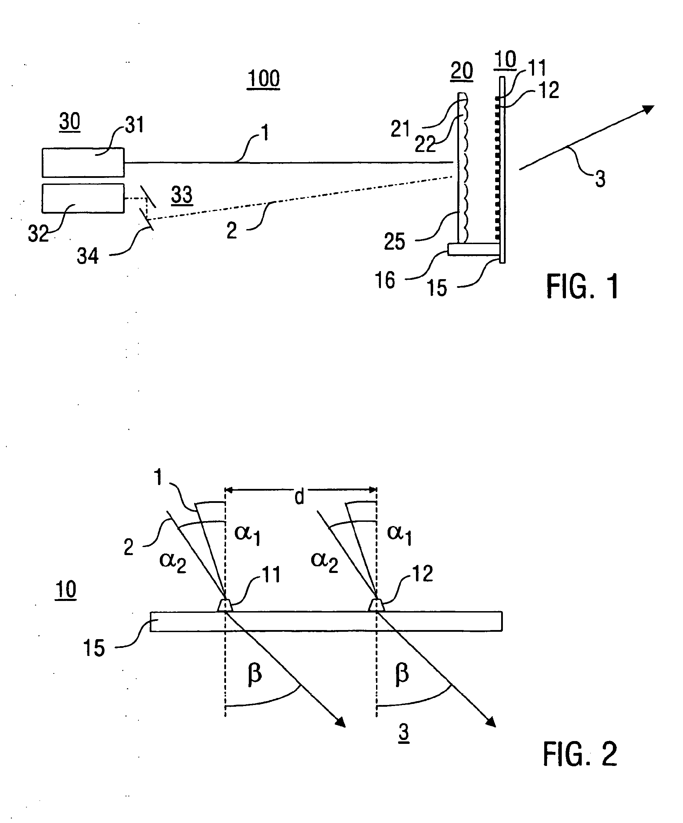

As schematically shown in Figure 1, a radiation source 100 of the invention comprises a photomixer device 10, an irradiation device 20 and a laser device 30. The devices 10, 20 and 30 are arranged in a common container or on a common base plate (not shown).

The photomixer device 10 comprises a plurality of high-frequency emitters 11, 12, ... (THz emitters) arranged as an array on the plane surface of a substrate 15. The phased array of high-frequency emitters 11, 12, ... consists of n * m single emitters with dipole or broadband antennas, (n, m being at least 2). The high-frequency emitters comprise semiconductor elements being capable of the above photomixing. The substrate 15 is made of a material transparent for THz radiation, like e.g. a semiconductor wafer made of e.g. GaAs or InP. Preferably, the individual high-frequency emitters are epitaxially grown on the substrate 15. Furthermore, electrical connections are arranged on the substrate surface (not shown). The distance d (see Figure 2) between individual emitters arranged adjacent to each other is e.g. 100 $\mu$m.

The irradiation device 20 comprises a micro-lens array 25. A plurality of micro-lenses 21, 22, ... are integrally formed as the micro-lens array 25. The lenses 21, 22, ... are arranged with the same geometrical shape and dimensions like the array of emitters 11, 12, .... Each lens 21, 22, ... is adapted for directing laser beams to one of the high-frequency emitters 11, 12, .... The distance between the photomixer and irradiation devices 10, 20 is selected such that the high-frequency emitters 11, 12, ... are arranged in the foci of the lenses 21, 22, .... Both devices are connected via a holding structure 16, which is preferably adapted for adjusting a focal distance of the high-frequency emitters relative to the lenses.

The laser device 30 comprises two tuneable lasers 31, 32 and optical components 33 for directing the laser beams 1, 2 to the irradiation device 20. The lasers 31, 32 are high-power solid state lasers, like e.g.... (manufacturer: Coherent, Newport). The laser beams 1, 2 and the THz beam 3 are represented by the centre lines of their beam profiles in the drawing only. In practice, the optical components 33 include profile shaper for broadening the lasers beams 1, 2 up to a cross section according to the extension of the micro-lens array and the emitter array respectively. With the above example, the laser beams 1, 2 are broadened up to a diameter of 2 mm.

The optical components 33 include a pivotable mirror 34 for adjusting the angle of incidence of laser beam 2. The drawings show disproportionate angles of incidence for clarity reasons. In practice, the relative angle of incidence is smaller than 2°.

According to an alternative embodiment, the pivotable mirror 34 can be omitted if e.g. the laser 32 can be tilted relative to the laser 31. If only collinear laser beams 1, 2 are required for a particular application of the radiation source 100, any adjustment of the angle of incidence can be omitted.

According to a further alternative embodiment of the invention, another approach can be provided instead of the free space set-up with two lasers shown in Figure 1. As the distance d of the high-frequency emitters is close to the diameter of standard glass fibres (about 125 $\mu$m) a fibre bundle can replace the micro-lens array of the irradiation device 20.

Further details of generating the high-frequency radiation are described in the following with reference to Figure 2. Figure 2 illustrates a partial view of the photomixer device 10 with two high-frequency emitters 11, 12 on the semiconductor substrate 15. The distance d of the emitter centres corresponding to the distance of the dipole antennas included in each of the emitters comprises 100 $\mu$m. From the upper side, the emitters 11, 12 are illuminated with laser beams 1, 2 having angles of incidence $\alpha_1$ and $\alpha_2$ relative to the perpendicular normal on the substrate 15. The collimated high-frequency beam 3 is emitted with the propagation angle $\beta$.

With two laser beams 1, 2 (optical frequencies $\omega_1$, $\omega_2$, wave vectors $k_1$, $k_2$, phases $\varphi_1$,$\varphi_2$) being equally polarized and having the same amplitude $E_0$, the intensity $I$ of irradiation in each of the high-frequency emitters can be described according to:

$$I \sim \left|Re\,\vec{E}\right|^2 = 2E_0^2\,cos^2(\,\vec{k}_M \cdot \vec{x} - \omega_M t + \varphi_M\,)\left[1 + cos(\Delta\vec{k}_M \cdot \vec{x} - \Delta\omega_M t + \Delta\varphi\,)\right] \qquad (1)$$

$$\begin{pmatrix} \vec{k}_M = (\vec{k}_1 + \vec{k}_2\,)/2; \;\; \Delta\vec{k}_M = (\vec{k}_1 - \vec{k}_2\,); \;\; \omega_M = (\omega_1 + \omega_2\,)/2; \;\; \Delta\omega = (\omega_1 - \omega_2\,); \\ \varphi_M = (\varphi_1 + \varphi_2\,)/2; \;\; \Delta\varphi = (\varphi_1 - \varphi_2\,) \end{pmatrix}$$

The fast oscillation of the intensity with the (optical) centre frequency $\omega_M$ is modulated in intensity with the THz frequency $\Delta\omega$. A phase difference $\Delta\Phi$ between adjacent devices 11, 12 can be described according to:

$$\Delta\Phi = (\,k_2\,sin\,\alpha_1 - k_1\,sin\,\alpha_2\,)d \qquad (2)$$

Accordingly, the incident angles $\alpha_1$, $\alpha_2$ directly determine the phase difference of driving the individual high-frequency emitters.

If both laser beams 1, 2 irradiate the sample under the same angle $\alpha_1 = \alpha_2$, the phase difference is $\Delta\Phi = 0.33 \cdot 2\pi\,sin\alpha_1$. This phase difference is obtained with $\Delta\omega = 1$ THz, centre frequency 350 THz (corresponding to 857 nm) and d = 100 $\mu$m.

With different incident angles $\alpha_1 = 0°$, $\alpha_2$, the phase difference is $\Delta\Phi = 733 \cdot sin\alpha_2$. This shows that for obtaining a $2\pi$ phase shift, only a very small angular difference between the two laser beams 1, 2 of $\alpha_2 = 0.5°$ is needed. Therefore, the full phase of $2\pi$ is available by a small change of the angular difference of the incoming laser beams 1, 2.

If the characteristics of the individual high-frequency emitters 11, 12, ... show a rotational symmetry (according to the characteristic of dipole antennas) and neighbouring emitters emit the same power and have the same polarization, the propagation angle $\beta$ of the maximum of 0th order constructive superposition of individual emissions is determined by the phase difference $\Delta\Phi$ and accordingly by $\alpha_1$ and $\alpha_2$.

$$\beta = -arcsin\frac{\Delta\Phi\lambda_{THz}}{2\pi d} \qquad (3)$$

Accordingly, the propagation angle $\beta$ can be adjusted simply by selecting appropriate angles of incidence.

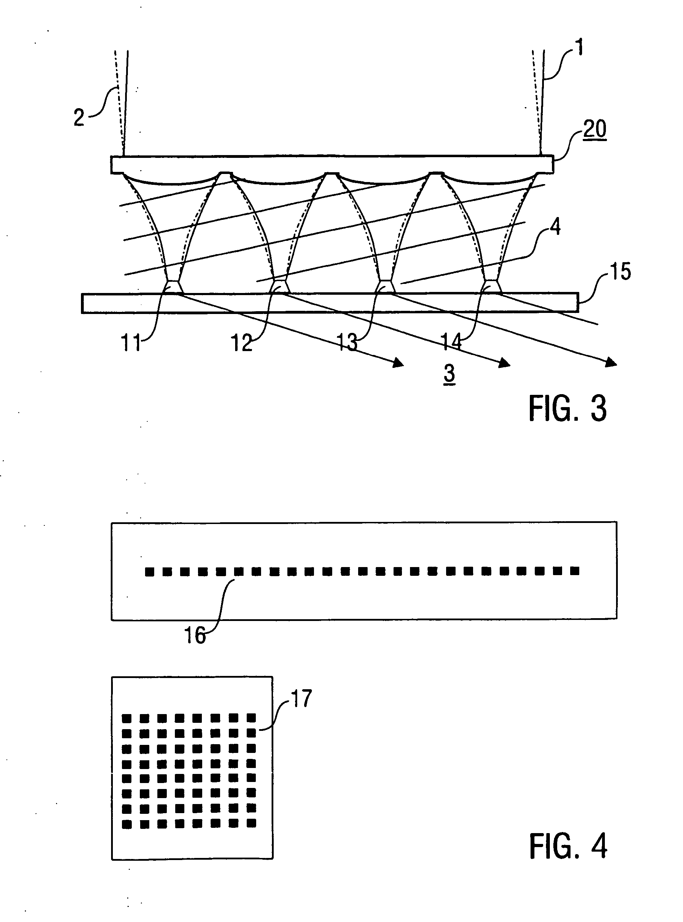

Figure 3 illustrates schematically the incident laser beams 1, 2 with different angles of incidence yielding intensity wave fronts 4 of the superimposed optical waves. The wave fronts are inclined relative to the plane surface of the substrate 15 so that the high-frequency carrier generation in the emitters 11, 12, 13, 14 occurs with the above phase difference. As a result, the high-frequency radiation beam 3 is emitted with the illustrated propagation angle.

Figure 4 schematically illustrates two examples of arranging the high-frequency emitters as a row-shaped array 16 (no embodiment of the invention) or as a matrix array 17 having a rectangular, preferably quadratic shape.

**Claims**

1. Method of generating high-frequency radiation, comprising the step of:

- irradiating a photomixer device (10) with laser beams (1, 2) detuned by a frequency in a high-frequency range from 0.3 to 5 THz, wherein
- the photomixer device (10) includes at least four high-frequency emitters (11 - 14) being irradiated with the detuned laser beams (1, 2),

**characterized in that**

- the at least four high-frequency emitters (11 - 14) are arranged as a 2-dimensional matrix phased array (17), wherein the distance between the individual high-frequency emitters is smaller than 500 $\mu$m and larger or equal 50 $\mu$m,
- the at least four high-frequency emitters (11 - 14) of the photomixer device (10) are irradiated via a micro-array of lenses (21), a plurality of optical fibers, or opto-electronic integrated devices, said opto-electronic integrated devices being arranged for coupling irradiation directly into the high-frequency emitters (11 - 14), and
- a collimated beam (3) of high-frequency radiation is generated by constructively superimposing electromagnetic high-frequency emissions of the high-frequency emitters (11 - 14).

2. Method according to claim 1, wherein the high-frequency emitters (11 - 14) are irradiated with one laser beam containing one pair of laser wavelengths or with one pair of laser beams (1, 2).

3. Method according to claim 1 or 2, wherein the high-frequency emitters (11 - 14) are irradiated with parallel laser beams (1, 2).

4. Method according to claim 1 or 2, wherein the high-frequency emitters (11 - 14) are irradiated with laser beams (1, 2) having different incidence angles ($\alpha_1$, $\alpha_2$).

5. Method according to claim 4, wherein a propagation angle ($\beta$) of the collimated beam (3) of high-frequency radiation is changed by varying at least one of the incidence angles ($\alpha_1$, $\alpha_2$).

6. Method according to claim 5, wherein at least one of the different incidence angles ($\alpha_1$, $\alpha_2$) is varied by pivoting a mirror (33) relative to the photomixer device (10).

7. Method according to at least one of the foregoing claims, wherein a frequency of the high-frequency radiation is changed by varying the wavelength of at least one of the detuned laser beams (1, 2).

8. Method according to at least one of the foregoing claims, wherein antennas are used as high-frequency emitters (11 - 14) for coupling the high-frequency radiation into free space.

9. Method according to claim 8, wherein resonant antennas or broadband antennas are used for coupling the high-frequency radiation into free space.

10. Method according to at least one of the foregoing claims, wherein the high-frequency radiation is polarized.

11. Radiation source (100) for generating high-frequency radiation, comprising:

- a photomixer device (10) for emitting high-frequency radiation, wherein the photomixer device (10) comprises at least four high-frequency emitters (11 - 14) being arranged for irradiation with laser beams (1, 2) detuned by a frequency in a high-frequency range,

**characterized in that**

- the at least four high-frequency emitters (11 - 14) are arranged as a 2-dimensional matrix phased array (17) for constructively superimposing electromagnetic high-frequency emissions of the high-frequency emitters (11 - 14), wherein the distance between the individual high-frequency emitters is smaller than 500 $\mu$m and larger or equal 50 $\mu$m, and
- an irradiation device (20) is provided for adjusting the laser beams (1, 2) relative to the photomixer device (10), wherein the irradiation device (20) comprises a micro-array of lenses (21), a plurality of optical fibers, or opto-electronic integrated devices being arranged for irradiating the at least four high-frequency emitters (11 - 14), said opto-electronic integrated devices being arranged for coupling irradiation directly into the high-frequency emitters (11 - 14).

**12.** Radiation source according to claim 11, wherein each of the high-frequency emitters (11 - 14) comprises a layer structure, a pin structure or a multiple-pin structure.

**13.** Radiation source according to at least one of the claims 11 or 12, further comprising a laser device (30) for generating the laser beams (1, 2) detuned by the frequency in the high-frequency range.

**14.** Radiation source according to claim 13, wherein the laser device (30) comprises two lasers (31, 32) for generating one pair of laser beams (1, 2) to be irradiated onto the at least four high-frequency emitters (11 - 14).

**15.** Radiation source according to claim 14, wherein the laser device (30) is adapted for generating one pair of parallel laser beams (1, 2).

**16.** Radiation source according to claim 15, wherein the laser device (30) is adapted for generating one pair of laser beams (1, 2) having different incidence angles ($\alpha_1$, $\alpha_2$).

**17.** Radiation source according to claim 16, wherein the laser device (30) comprises a pivotable mirror (33) for adjusting at least one of the incidence angles ($\alpha_1$, $\alpha_2$).

**18.** Radiation source according to at least one of the claims 11 to 17, wherein the laser device (30) is adapted for varying the wavelength of at least one of the detuned laser beams (1, 2).

**19.** Radiation source according to at least one of the claims 11 to 18, wherein the high-frequency emitters (11 - 14) comprise antennas being arranged for coupling the high-frequency radiation into free space.

**20.** Radiation source according to claim 19, wherein the antennas comprise resonant antennas or broadband antennas.

**21.** Radiation source according to at least one of the claims 11 to 20, wherein the high-frequency emitters comprise THz emitters (11 - 14).

**22.** THz imaging apparatus including a radiation source according to at least one of the claims 11 to 21.


**Patentansprüche**

**1.** Verfahren zur Erzeugung von Hochfrequenz-Strahlung, umfassend den Schritt:

- Bestrahlung einer Photomischer-Einrichtung (10) mit Laserstrahlen (1, 2), die um eine Frequenz in einem Hochfrequenz-Bereich von 0,3 bis 5 THz verstimmt sind, wobei
- die Photomischer-Einrichtung (10) mindestens vier Hochfrequenz-Emitter (11 - 14) enthält, die mit den verstimmten Laserstrahlen (1, 2) bestrahlt werden,

**dadurch gekennzeichnet, dass**

- die mindestens vier Hochfrequenz-Emitter (11-14) als ein zweidimensionales Matrix-Phasenarray (17) angeordnet sind, wobei der Abstand zwischen den einzelnen Hochfrequenz-Emittern kleiner als 500 μm und größer oder gleich 50 μm ist,
- die mindestens vier Hochfrequenz-Emitter (11 - 14) der Photomischer-Einrichtung (10) über ein Mikroarray von Linsen (21), eine Vielzahl von optischen Fasern, oder opto-elektronische integrierte Einrichtungen bestrahlt werden, wobei die opto-elektronischen integrierten Einrichtungen angeordnet sind, um Strahlung direkt in die Hochfrequenz-Emitter (11-14) einzukoppeln, und
- ein kollimierter Strahl (3) der Hochfrequenz-Strahlung durch eine konstruktive Überlagerung von elektromagnetischen Hochfrequenz-Emissionen der Hochfrequenz-Emitter (11 - 14) erzeugt wird.

**2.** Verfahren gemäß Anspruch 1, wobei die Hochfrequenz-Emitter (11 - 14) mit einem Laserstrahl, der ein Paar von Laser-Wellenlängen enthält, oder mit einem Paar von Laserstrahlen (1, 2) bestrahlt werden.

**3.** Verfahren gemäß Anspruch 1 oder 2, wobei die Hochfrequenz-Emitter (11 - 14) mit parallelen Laserstrahlen (1, 2) bestrahlt werden.

**4.** Verfahren gemäß Anspruch 1 oder 2, wobei die Hochfrequenz-Emitter (11 - 14) mit Laserstrahlen (1, 2) bestrahlt werden, die verschiedene Einfallswinkel ($\alpha_1$, $\alpha_2$) aufweisen.

**5.** Verfahren gemäß Anspruch 4, wobei ein Ausbreitungswinkel ($\beta$) des kollimierten Strahls (3) der Hochfrequenz-Strahlung verändert wird, indem mindestens einer der Einfallswinkel ($\alpha_1$, $\alpha_2$) variiert wird.

**6.** Verfahren gemäß Anspruch 5, wobei mindestens einer der verschiedenen Einfallswinkel ($\alpha_1$, $\alpha_2$) durch Verkippen eines Spiegels (33) relativ zu der Photomischer-Einrichtung (10) variiert wird.

**7.** Verfahren gemäß mindestens einem der vorhergehenden Ansprüche, wobei eine Frequenz der Hochfrequenz-Strahlung verändert wird, indem die Wellenlänge von mindestens einem der verstimmten Laserstrahlen (1, 2) variiert wird.

**8.** Verfahren gemäß mindestens einem der vorhergehenden Ansprüche, wobei Antennen als Hochfrequenz-Emitter (11 - 14) zum Koppeln der Hochfrequenz-Strahlung in den freien Raum verwendet werden.

**9.** Verfahren gemäß Anspruch 8, wobei resonante Antennen oder Breitband-Antennen zum Koppeln der Hochfrequenz-Strahlung in den freien Raum verwendet werden.

**10.** Verfahren gemäß mindestens einem der vorhergehenden Ansprüche, wobei die Hochfrequenz-Strahlung polarisiert ist.

**11.** Strahlungsquelle (100) zur Erzeugung von Hochfrequenz-Strahlung, umfassend:

- eine Photomischer-Einrichtung (10) zum Emittieren von Hochfrequenz-Strahlung, wobei die Photomischer-Einrichtung (10) mindestens vier Hochfrequenz-Emitter (11 - 14) umfasst, die zur Bestrahlung mit Laserstrahlen (1, 2) angeordnet sind, die durch eine Frequenz in einem Hochfrequenz-Bereich verstimmt sind,

**dadurch gekennzeichnet, dass**

- die mindestens vier Hochfrequenz-Emitter (11 - 14) als ein zweidimensionales Matrix-Phasenarray (17) zur konstruktiven Überlagerung elektromagnetischer Hochfrequenz-Emissionen der Hochfrequenz-Emitter (11 - 14) angeordnet sind, wobei der Abstand zwischen den einzelnen Hochfrequenz-Emittern kleiner als 500 $\mu$m und größer oder gleich 50 $\mu$m ist, und
- eine Bestrahlungseinrichtung (20) zur Einstellung der Laserstrahlen (1, 2) in Bezug auf die Photomischer-Einrichtung (10) vorgesehen ist, wobei die Bestrahlungseinrichtung (20) ein Mikroarray aus Linsen (21), eine Vielzahl von optischen Fasern oder opto-elektronische integrierte Einrichtungen umfasst, die angeordnet sind, um die mindestens vier Hochfrequenz-Emitter (11 - 14) zu bestrahlen, wobei die opto-elektronischen integrierten Einrichtungen angeordnet sind, um Strahlung direkt in die Hochfrequenz-Emitter (11 - 14) einzukoppeln.

**12.** Strahlungsquelle gemäß Anspruch 11, wobei jeder der Hochfrequenz-Emitter (11 - 14) eine Schichtstruktur, eine Pin-Struktur oder eine Mehrfach-Pin-Struktur umfasst.

**13.** Strahlungsquelle gemäß mindestens einem der Ansprüche 11 oder 12, die ferner eine Lasereinrichtung (30) zur Erzeugung der Laserstrahlen (1, 2) umfasst, welche durch die Frequenz in dem Hochfrequenz-Bereich verstimmt sind.

**14.** Strahlungsquelle gemäß Anspruch 13, wobei die Lasereinrichtung (30) zwei Laser (31, 32) zur Erzeugung von einem Paar von Laserstrahlen (1, 2) umfasst, die auf die mindestens vier Hochfrequenz-Emitter (11 - 14) zu strahlen sind.

**15.** Strahlungsquelle gemäß Anspruch 14, wobei die Lasereinrichtung (30) zur Erzeugung eines Paares von parallelen Laserstrahlen (1, 2) angepasst ist.

**16.** Strahlungsquelle gemäß Anspruch 15, wobei die Lasereinrichtung (30) zur Erzeugung eines Paares von Laserstrahlen (1, 2) mit verschiedenen Einfallswinkeln ($\alpha_1$, $\alpha_2$) angepasst ist.

17. Strahlungsquelle gemäß Anspruch 16, wobei die Lasereinrichtung (30) einen verschwenkbaren Spiegel (33) zur Einstellung von mindestens einem der Einfallswinkel ($\alpha_1$, $\alpha_2$) umfasst.

18. Strahlungsquelle gemäß mindestens einem der Ansprüche 11 bis 17, wobei die Lasereinrichtung (30) zur Variation der Wellenlänge von mindestens einem der verstimmten Laserstrahlen (1, 2) angepasst ist.

19. Strahlungsquelle gemäß mindestens einem der Ansprüche 11 bis 18, wobei die Hochfrequenz-Emitter (11 - 14) Antennen umfassen, die angeordnet sind, um die Hochfrequenz-Strahlung in den freien Raum zu koppeln.

20. Strahlungsquelle gemäß Anspruch 19, wobei die Antennen resonante Antennen oder Breitband-Antennen umfassen.

21. Strahlungsquelle gemäß mindestens einem der Ansprüche 11 bis 20, wobei die Hochfrequenz-Emitter THz-Emitter (11 - 14) umfassen.

22. THz-Abbildungsgerät, das eine Strahlungsquelle gemäß mindestens einem der Ansprüche 11 bis 21 enthält.

**Revendications**

1. Procédé de génération d'un rayonnement haute fréquence, comprenant l'étape consistant à :

   - irradier un dispositif photomélangeur (10) avec des faisceaux laser (1, 2) désaccordés d'une fréquence dans une plage de haute fréquence de 0,3 à 5 THz, dans lequel
   - le dispositif photomélangeur (10) comprend au moins quatre émetteurs haute fréquence (11 à 14) qui sont irradiés avec les faisceaux lasers (1, 2) désaccordés,

   **caractérisé en ce que**

   - lesdits au moins quatre émetteurs haute fréquence (11 à 14) sont agencés en un réseau matriciel à commande de phase bidimensionnel (17), dans lequel la distance entre les émetteurs haute fréquence individuels est inférieure à 500 $\mu$m et supérieure ou égale à 50 $\mu$m,
   - lesdits au moins quatre émetteurs haute fréquence (11 à 14) du dispositif photomélangeur (10) sont irradiés par l'intermédiaire d'un microréseau de lentilles (21), d'une pluralité de fibres optiques, ou de dispositifs intégrés optoélectroniques, lesdits dispositifs intégrés optoélectroniques étant agencés pour coupler l'irradiation directement dans les émetteurs haute fréquence (11 à 14), et
   - un faisceau collimaté (3) de rayonnement haute fréquence est généré en superposant de manière constructive les émissions électromagnétiques haute fréquence des émetteurs haute fréquence (11 à 14).

2. Procédé selon la revendication 1, dans lequel les émetteurs haute fréquence (11 à 14) sont irradiés avec un faisceau laser contenant une paire de longueurs d'onde de laser ou avec une paire de faisceaux lasers (1, 2).

3. Procédé selon la revendication 1 ou 2, dans lequel les émetteurs haute fréquence (11 à 14) sont irradiés avec des faisceaux lasers (1, 2) parallèles.

4. Procédé selon la revendication 1 ou 2, dans lequel les émetteurs haute fréquence (11 à 14) sont irradiés avec des faisceaux lasers (1, 2) ayant différents angles d'incidence ($\alpha_1$, $\alpha_2$).

5. Procédé selon la revendication 4, dans lequel l'angle de propagation ($\beta$) du faisceau collimaté (3) de rayonnement haute fréquence est modifié en faisant varier au moins l'un des angles d'incidence ($\alpha_1$, $\alpha_2$).

6. Procédé selon la revendication 5, dans lequel au moins l'un des différents angles d'incidence ($\alpha_1$, $\alpha_2$) est modifié en faisant pivoter un miroir (33) par rapport au dispositif photomélangeur (10).

7. Procédé selon au moins l'une des revendications précédentes, dans lequel une fréquence du rayonnement haute fréquence est modifiée en faisant varier la longueur d'onde d'au moins l'un des faisceaux lasers (1, 2) désaccordés.

8. Procédé selon au moins l'une des revendications précédentes, dans lequel des antennes sont utilisées en tant qu'émetteurs haute fréquence (11 à 14) pour coupler le rayonnement haute fréquence dans l'espace libre.

9. Procédé selon la revendication 8, dans lequel des antennes résonantes ou des antennes large bande sont utilisées pour coupler le rayonnement haute fréquence dans l'espace libre.

10. Procédé selon au moins l'une des revendications précédentes, dans lequel le rayonnement haute fréquence est polarisé.

11. Source de rayonnement (100) pour générer un rayonnement haute fréquence, comprenant :

- un dispositif photomélangeur (10) pour émettre un rayonnement haute fréquence, dans laquelle le dispositif photomélangeur (10) comprend au moins quatre émetteurs haute fréquence (11 à 14) qui sont agencés pour être irradiés avec des faisceaux lasers (1, 2) désaccordés d'une fréquence dans une plage haute fréquence,

**caractérisée en ce que**

- lesdits au moins quatre émetteurs haute fréquence (11 à 14) sont agencés en un réseau matriciel à commande de phase bidimensionnel (17) pour superposer de manière constructive les émissions électromagnétiques haute fréquence des émetteurs haute fréquence (11 à 14), dans laquelle la distance entre les émetteurs haute fréquence individuels est inférieure à 500 $\mu$m et supérieure ou égale à 50 $\mu$m, et
- un dispositif de rayonnement (20) est prévu pour ajuster les faisceaux lasers (1, 2) par rapport au dispositif photomélangeur (10), dans laquelle le dispositif de rayonnement (20) comprend un microréseau de lentilles (21), une pluralité de fibres optiques, ou des dispositifs intégrés optoélectroniques qui sont agencés pour irradier lesdits au moins quatre émetteurs haute fréquence (11 à 14), lesdits dispositifs intégrés optoélectroniques étant agencés pour coupler l'irradiation directement dans les émetteurs haute fréquence (11 à 14).

12. Source de rayonnement selon la revendication 11, dans laquelle chacun des émetteurs haute fréquence (11 à 14) comprend une structure en couches, une structure pin, ou une structure multipin.

13. Source de rayonnement selon au moins l'une des revendications 11 et 12, comprenant en outre un dispositif laser (30) pour générer les faisceaux lasers (1, 2) désaccordés de la fréquence dans la plage de haute fréquence.

14. Source de rayonnement selon la revendication 13, dans laquelle le dispositif laser (30) comprend deux lasers (31, 32) pour générer une paire de faisceaux lasers (1, 2) destinés à être rayonnés sur lesdits au moins quatre émetteurs haute fréquence (11 à 14).

15. Source de rayonnement selon la revendication 14, dans laquelle le dispositif laser (30) est adapté pour générer une paire de faisceaux lasers (1, 2) parallèles.

16. Source de rayonnement selon la revendication 15, dans laquelle le dispositif laser (30) est adapté pour générer une paire de faisceaux lasers (1, 2) ayant différents angles d'incidence ($\alpha_1$, $\alpha_2$).

17. Source de rayonnement selon la revendication 16, dans laquelle le dispositif laser (30) comprend un miroir (33) pivotant pour ajuster au moins l'un des angles d'incidence ($\alpha_1$, $\alpha_2$).

18. Source de rayonnement selon au moins l'une des revendications 11 à 17, dans laquelle le dispositif laser (30) est adapté pour faire varier la longueur d'onde d'au moins l'un des faisceaux lasers (1, 2) désaccordés.

19. Source de rayonnement selon au moins l'une des revendications 11 à 18, dans laquelle les émetteurs haute fréquence (11 à 14) comprennent des antennes qui sont agencées pour coupler le rayonnement haute fréquence dans l'espace libre.

20. Source de rayonnement selon la revendication 19, dans laquelle les antennes comprennent des antennes résonantes ou des antennes large bande.

21. Source de rayonnement selon au moins l'une des revendications 11 à 20, dans laquelle les émetteurs haute fréquence comprennent des émetteurs THz (11 à 14).

**22.** Appareil d'imagerie THz comprenant une source de rayonnement selon au moins l'une des revendications 11 à 21.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. BABIERI et al.** *APL,* 2004, vol. 85, 1674
- **G. H. DÖHLER et al.** *Semicond. Sci. Technol.,* 2005, vol. 20, S178-S190
- **E. R. BROWN et al.** *APL,* 1995, vol. 66, 285
- **K. A. MCINTOSH et al.** *APL,* 1996, vol. 67, 3844
- Microwave Photonics. **D. Saeedkia et al.** 2004, MWP '04, 2004, IEEE International Topical Meeting on Ogunquit. IEEE, 04 October 2004, vol. 41, 317-320
- *IEEE Journal of Quantum Electronics,* vol. 41, 234-241
- **Y. Ito et al.** Electronics Letters. *IEEE Stevenage,* 2003, vol. 39, 65-67